Europäisches Patentamt

European Patent Office

Office européen des brevets

(11) Publication number: **0 151 043**
**B1**

(12) **EUROPEAN PATENT SPECIFICATION**

(45) Date of publication of patent specification: 04.10.89

(21) Application number: 85300671.6

(22) Date of filing: 31.01.85

(51) Int. Cl.⁴: **B 60 K 41/22,** F 16 D 27/16, **B 60 K 41/14**

(54) **System for controlling an electromagnetic clutch of a vehicle.**

(30) Priority: 31.01.84 JP 15417/84

(43) Date of publication of application:
07.08.85 Bulletin 85/32

(45) Publication of the grant of the patent:
04.10.89 Bulletin 89/40

(84) Designated Contracting States:
CH DE FR GB IT LI NL

(56) References cited:
EP-A-0 095 132
EP-A-0 095 147
DE-A-1 505 402
GB-A-2 071 803
GB-A-2 081 412
GB-A-2 083 589
US-A-4 369 675

(73) Proprietor: FUJI JUKOGYO KABUSHIKI KAISHA
7-2 Nishishinjuku 1-chome Shinjuku-ku
Tokyo (JP)

(72) Inventor: Sakakiyama, Ryuzo
1-21 Takamatsu Toshima-ku
Tokyo (JP)

(74) Representative: Kirk, Geoffrey Thomas et al
BATCHELLOR, KIRK & EYLES 2 Pear Tree Court
Farringdon Road
London EC1R 0DS (GB)

## Description

The present invention relates to a system for controlling an electromagnetic clutch for a vehicle having an infinitely variable belt-drive automatic transmission.

U.S. Patent 4,401,199 discloses a system for controlling an electromagnetic clutch of an internal combustion engine mounted on a vehicle, in accordance with the engine speed and vehicle speed. Further, U.S. Patent 4,369,675 discloses an infinitely variable belt-drive transmission for a vehicle. The transmission comprises an endless belt running over a driving pulley and a driven pulley, each pulley being so designed that the running diameter of the driving belt on the pulley can be varied by a hydraulic control system. In the system, operational ranges such as a drive range (D range) and reverese range (R range) are provided. In addition, it has proposed to provide a high engine speed drive range (Ds range) in the infinitely variable belt-drive transmission. When the Ds range is selected while driving in the drive range, the transmission ratio is increased, so that the speed of the engine is increased to drive the vehicle and to provide an active drive of the vehicle. In other words, the vehicle is driven in a high engine speed range. However, since the transmission ratio is increased in the Ds range, engine speed must be rapidly increased in order to keep the vehicle speed constant. Accordingly, if the engine speed is not rapidly or sufficiently increased to meet the downshifted transmission ratio, the vehicle is rapdily decelerated by the engine braking effect and the vehicle is subject to great shock.

It is known from EP—A—95132 (against which claim 1 has been drawn) to have a system for controlling a hydraulic clutch of a continuously variable transmission, where upon selection of a Ds of L range (high engine speed range) the clutch torque is reduced.

An object of the present invention is to provide a system for controlling an electromagnetic clutch for infinitely variable transmission having a Ds range, which may reduce the shock caused by engine braking when the Ds range is selected.

In accordance with the present invention, there is provided a system for contorlling a clutch of a vehicle having an infinitely variable transmission which has a high engine speed drive range (Ds) which increases the transmission ratio when selected, the system including a high speed drive range switch responsive to the selection of the high engine speed drive range to produce a Ds range signal; the system providing a reduction of the clutch torque upon selection of the high engine speed drive range characterised in that the clutch is an electromagnetic clutch and in the provision of a control unit having a reference voltage generating circuit which has means responsive to the Ds range signal for producing a changed reference voltage, and a pulse train generating circuit for producing a pulse train dependant on the reference voltage and varying the duty ratio of said pulse train to vary the clutch torque.

An accelerator pedal position switch may be provided for producing an accelerator position signal when the accelerator pedal of the vehicle is depressed beyond a predetermined degree, circuit means responding to the accelerator position signal for decreasing the predetermined time.

The invention will be more readily understood by way of example from the following description of control systems in accordance therewith, reference being made to the accompanying drawings, in which:

Figures 1a and 1b are sectional views of an infinitely variable belt-drive transmission with which the control system may be employed;

Figure 2 illustrates a control circuit;

Figure 3(a) to (d) show waveforms at various parts of Figure 2;

Figure 4 is a graph showing the variation of clutch torque in the system of Figure 2;

Figure 5 shows a part of a modified control system; and

Figure 6 is a graph showing the variation of clutch torque in the system of Figure 5.

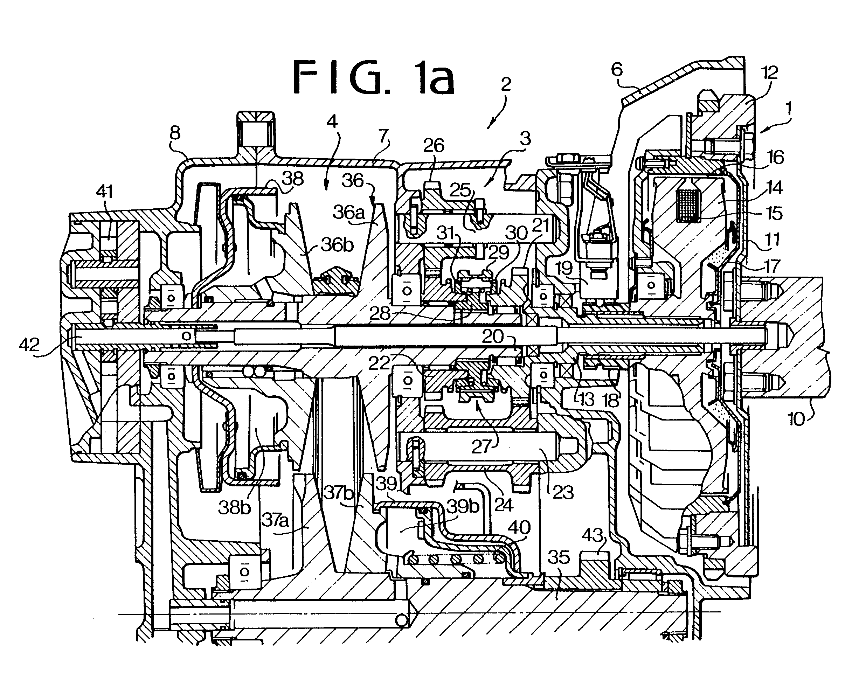

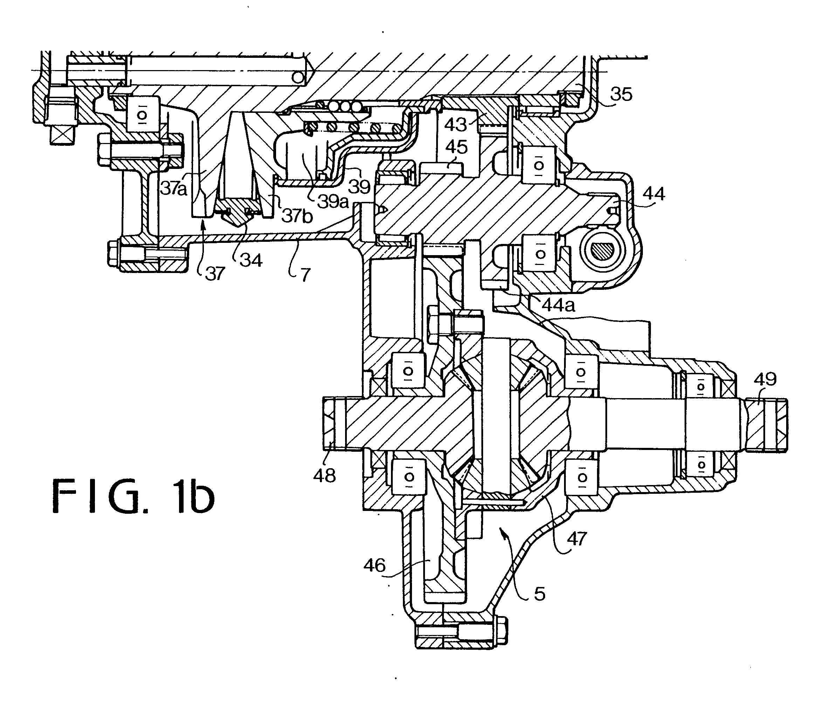

Referring to Figures 1a and 1b, the infinitely variable belt-drive automatic transmission for a vehicle comprises an electromagnetic powder clutch 1, an infinitely variable belt-drive transmission 2, a selector device 3, pulleys and belt device 4, final reduction device 5, and a pressure oil control circuit (not shown). The electromagnetic powder clutch 1 is located in a housing 6, and the selector device 3, pulleys, and belt device 4 and final reduction device 5 are located in a main housing 7 and a side housing 8. The crankshaft 10 of an engine (not shown) is connected to an annular drive member 12 through a drive plate 11 of the electromagnetic powder clutch 1. The electromagnetic powder clutch comprises a driven member 14 which carries a magnetizing coil 15. The driven member 14 has its outer periphery spaced from the inner periphery of the drive member 12 by a gap 16, and a powder chamber 17 is defined between the drive member 12 and driven member 14. Powder of magnetic material is provided in the powder chamber 17. The driven member 14 is secured to an input shaft 13 of the belt-drive transmission. A holder secured to the driven member 14 carries slip rings 18 which are electrically connected to the coil 15. The coil 15 is supplied through brushes 19 and slip rings 18 with current from a control circuit for the electromagnetic powder clutch.

When the magnetizing coil 15 is excited by the clutch current, driven member 14 is magnetized to produce a magnetic flux passing through the drive member 12. The magnetic powder is aggregated in the gap 16 by the magnetic flux and the driven member 14 is engaged with the drive member 12 by the powder. On the other hand, when the clutch current is cut off, the drive and driven members 12 and 14 are disengaged from one another.

In the belt-drive transmission 2, the selector device 3 is provided between the input shaft 13 and a main shaft 20. The main shaft 20 is cylindrical and is disposed coaxially with the input shaft 13. The selector device 3 comprises a drive gear 21 integral with input shaft 13, reverse driven gear 22 rotatably mounted on the main shaft 20, and a synchronizer 27 mounted on the main shaft 20. The drive gear 21 meshes with one of the counter gears 24 rotatably mounted on a shaft 23. Another gear of the counter gears 24 engages with an idler gear 26 which is rotatably mounted on a shaft 25 and which in turn engages with the driven gear 22.

The synchronizer 27 comprises a hub 28 secured to the main shaft 20, a synchronizer sleeve 29 slidably splined with the hub 28, and synchronizer rings 30 and 31. The synchronizer sleeve 29 is adapted to engage with splines of the drive gear 21 or with splines of driven gear 22 through rings 30 or 31.

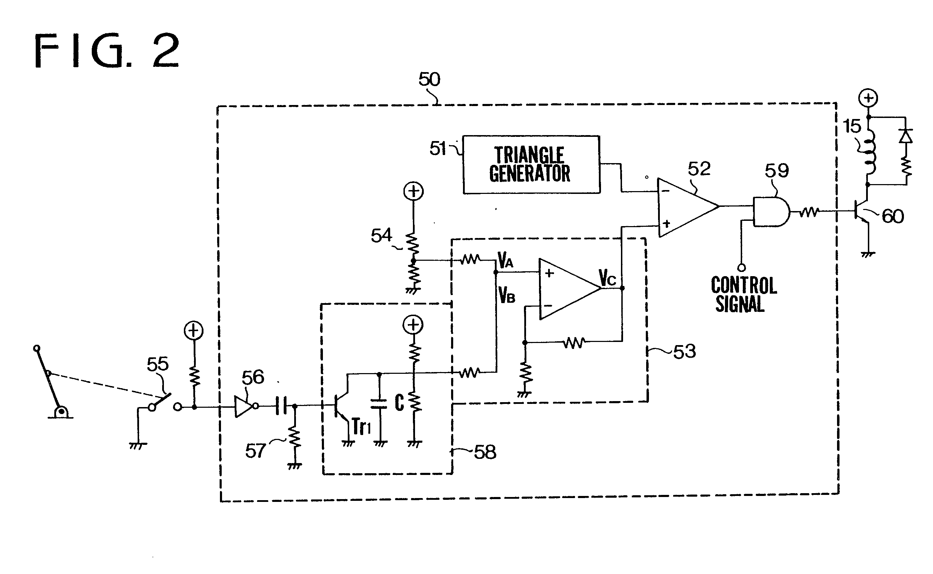

At the neutral position (N range) or the parking position of the selector lever 65 (Figure 2), sleeve 29 engages neither gear, so that the main shaft 20 is disconnected from the input shaft 13. When the sleeve 29 is engaged with the gear 21, the input shaft 13 is connected to the main shaft 20 through the gear 21 and synchronizer 27 to provide a driving range (D range) or a high engine speed drive range (Ds range).

When the sleeve 29 is engaged with the gear 22, the input shaft 13 is connected to the main shaft 20 through gears 21, 24, 26 and 22 to provide reverse drive (R range).

The main shaft 20 has an axial passage in which an oil pump driving shaft 42 connected to crankshaft 10 is mounted. An output shaft 35 is parallel with the main shaft 20. A drive pulley 36 and a driven pulley 37 are mounted on shafts 20 and 35. A fixed conical disc 36a of the drive pulley 36 is integral with main shaft 20 and an axially movable conical disc 36b is axially slidably mounted on the main shaft 20. The movable conical disc 36b also slides in a cylinder secured to the main shaft 20 to form a servo device 38. A chamber of the servo device 38 communicates through the pressure oil control circuit with an oil pump 41 driven by shaft 42.

A fixed conical disc 37a of the driven pulley 37 is formed on the output shaft 35 opposite the movable disc 36b and a movable conical disc 37b is slidably mounted on the shaft 35 opposite disc 36a. Movable conical disc 37b has a cylindrical portion in which a piston portion of the output shaft 35 is slidably engaged to form a servo device 39. A chamber of the servo device 39 is communicated with the oil pump 41 through the pressure oil control circuit. A sdpring 40 urges the movable conical disc 37b towards the fixed conical disc 37a. A drive belt 34 engages with the drive pulley 36 and the driven pulley 37.

Secured to the output shaft 35 is a drive gear 43 which engages with an intermediate reduction gear 44a on an intermediate shaft 44. An intermediate gear 45 on shaft 44 engages with a final gear 46. Rotation of the final gear 46 is transmitted to axles 48 and 49 of the vehicle driving wheels through a differential 47.

The pressure oil control circuit is responsive to vehicle speed, engine speed and throttle valve position and controls the oil from the oil pump 41 to servo devices 38 and 39 thereby to move discs 36b and 37b. Thus, the transmission ratio is infinitely changed. When the Ds range is selected, the transmission ratio is increased by the operation of the pressure oil control circuit.

Referring to Figure 2, a Ds range switch 55 is turned on to produce a low level signal when the selector lever 65 is shifted to the Ds range position. The Ds range switch 55 is connected to a reference voltage generating circuit 58 in a control unit 50 through an inverter 56 and a differentiation circuit 57. The reference voltage $V_B$ of the reference voltage generating circuit 58 and a voltage $V_A$ of the voltage divider 54 are applied to an adding circuit 53. The output voltage $V_C$ of the adding circuit 53 and a triangular pulse train from a triangle generator 51 are compared by a comparator 52. The output of the comparator 52 and a control signal are applied to an AND gate 59. The control signal is determined by the vehicle speed and other factors. The output of the AND gate 59 is applied to a base of a transistor 60 connected in series with the coil 15.

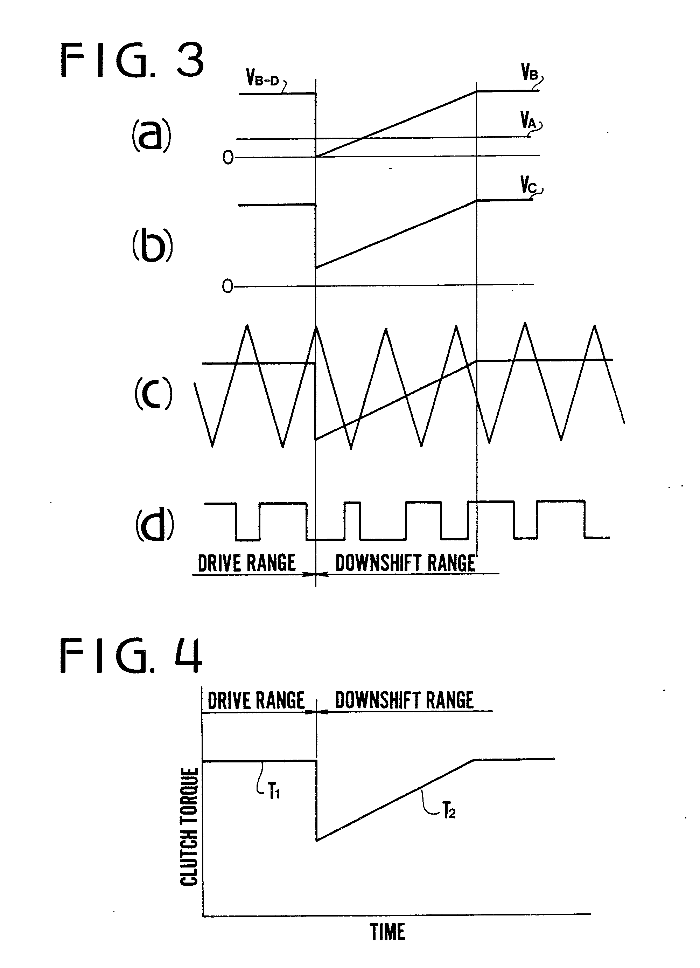

As shown in Figures 3(c) and 3(d), the comparator 52 produces a rectangular pulse train (d), the duty ratio of which increases with increase in the output voltage $V_C$ of the adding circuit 53. The more the duty ratio increases, the more the clutch current passing through the coil 15 and transistor 60 increases, i.e. the clutch torque increases.

When the drive range is selected, the Ds range switch 55 is turned off, so that a high level voltage is produced. The high level voltage is inverted by the inverter 56, thereby turning off a transistor $Tr_1$ in the reference voltage generating circuit 58 and charging a capacitor C. Thus, the reference voltage $V_B$ is at high level as shown by $V_B$—D in Figure 3(a). Accordingly, the sum voltage $V_C$ from the adding circuit 53 is also at high level as shown in Figure 3(b). Thus, the duty ratio of the pulse train from the AND gate 59 has a large value as shown in Figure 3(d), providing a large clutch torque $T_1$ (Figure 4) which fully engages the electromagnetic clutch 1.

When the Ds range is selected, the switch 55 is closed to produce a low level output which is inverted by inverter 56. The differentiation circuit 57 produces an output voltage having a sawtooth form. Accordingly, the transistor $Tr_1$ is temporarily turned on to discharge the capacitor C. The reference voltage $V_B$ rapidly decreases and then gradually increases with the charging of the capcitor C as shown in Figure 3(a). Therefore, the duty ratio of the pulse train first rapidly decreses at the beginning of the Ds range and thereafter grandually increases as shown in Figure 3(d). Thus, the clutch torque varies, gradually increasing after a sudden fall as shown by $T_2$ in Figure 4.

The clutch 1 slips during the decrease of the clutch torque, so that engine braking does not occur. As the duty ratio increases, the clutch progressively engages, effecting smooth engine braking.

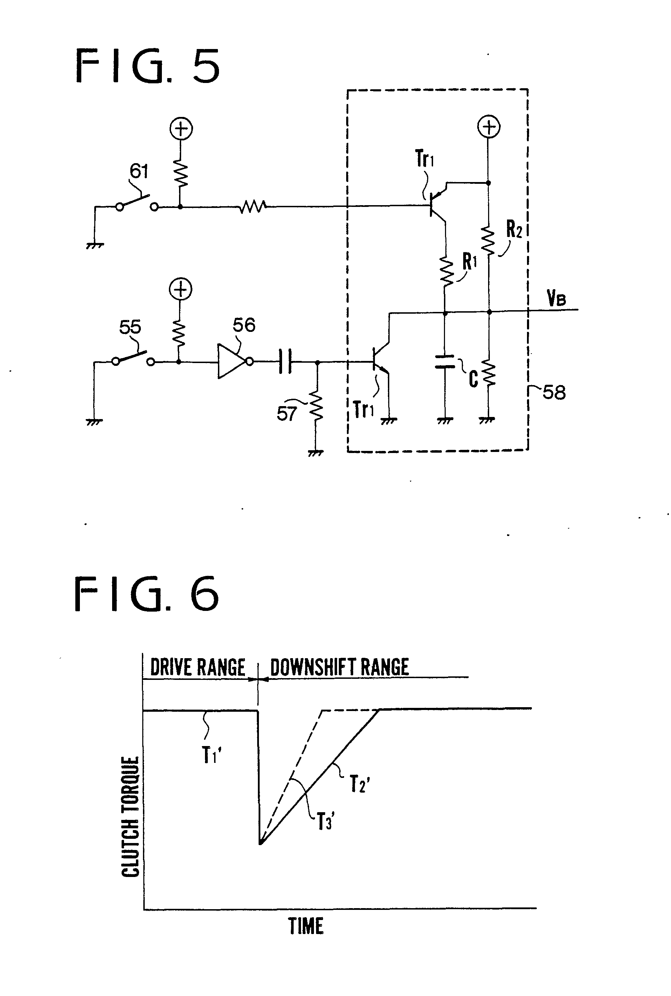

It will be understood that if engine speed is increased when the Ds range is selected, it is not necessary to decrease the clutch torque for the same long period of time. In the embodiment of Figure 5, the period of small clutch torque is shortened when engine speed is increased by a deep depression of the accelerator pedal, as described hereinafter.

Referring to Figure 5, the capacitor C in the reference voltage generating circuit 58 is connected to the power source through a resistor $R_1$ and a transistor $Tr_2$ and through a resistor $R_2$ connected in parallel with the resistor $R_1$ and transistor $Tr_2$. The base of the transistor $Tr_2$ is connected to an accelerator pedal position switch 61 which is closed when the accelerator pedal 66 of the vehicle is depressed beyond a predetermined degree. Other portions of the circuit are the same as the circuit of Figure 2.

When the Ds range is selected when the accelerator pedal 66 is depressed to a small degree, the capacitor C is charged through the resistor $R_2$ only, because the accelerator pedal position switch 61 is opened to turn off the transistor $Tr_2$. Accordingly, the clutch torque is decreased for a long time period as shown by $Tr_2'$ in Figure 6. On the other hand, when the accelerator pedal 66 is deeply depressed beyond the predetermined degree, switch 61 is closed to turn on the transistor $Tr_2$. Thus, the capacitor C is rapidly charged through resistors $R_1$ and $R_2$, so that the clutch torque increases to the rated value within a short time period as shown by $T_3'$. Although the period of small clutch torque is short, shock by the engine braking does not occur, because of the high engine speed. Moreover, since the clutch slips at the beginning of the Ds range, the speed can be rapidly increased by the depression of the accelerator pedal.

It will be understood that the system of the present invention can also be composed by a microcomputer system.

While the presently preferred embodiment of the present invention has been shown and described, it is to be understood that this disclosure is for the purpose of illustration.

## Claims

1. A system for controlling clutch (1) of a vehicle having an infinitely variable transmission (2) which has a high engine speed drive range (Ds) which increases the transmission ratio when selected, the system including a high speed drive range switch (55) responsive to the selection of the high engine speed drive range to produce a Ds range signal; the system providing a reduction of the clutch torque upon selection of the high engine speed drive range (Ds), characterised in that the clutch is an electromagnetic clutch and in the provision of a control unit (50) having a reference voltage generating circuit (58) which has means ($Tr_1$, C, $Tr_2$, R1 and R2) responsive to the Ds range signal for producing a changed reference voltage, and a pulse train generating circuit (51, 52) for producing a pulse train dependant on the reference voltage and varying the duty ratio of said pulse train to vary the clutch torque.

2. A system for controlling an electromagnetic clutch (1) according to claim 1, characterised in that said pulse train controls the clutch current first to reduce the clutch torque and thereafter progressively to restore the value of the clutch torque in a predetermined time.

3. A system for controlling an electromagnetic clutch according to claim 1 or 2, characterised in that an accelerator pedal position switch (61) for producing an accelerator position signal when an accelerator pedal of the vehicle is depressed beyond a predetermined degree, and circuit means ($Tr_2$, R1) responsive to the accelerator position signal for decreasing the predetermined time.

## Patentansprüche

1. Steuersytem für eine Kupplung (1) eines Fahrzeuges mit stufenols variablem Getriebe (2), das einen Fahrbereich (Ds) mit hoher Motordrehzahl besitzt, dessen Wahl die Getriebeübersetzung heraufsetzt; mit einem auf die Wahl des Fahrbereiches hoher Motordrehzahl ansprechenden Schalter (55), der ein Ds-Bereichssignal erzeugt; und bei dem eine Reduzierung des Kupplungsmoments bei der Wahl des Fahrbereiches (Ds) hoher Motordrehzahl erfolgt; dadurch gekennzeichnet, daß die Kupplung eine elektromagnetische Kupplung ist; daß eine Steuereinheit (50) mit einer Referenzspannungs-Erzeugerschaltung (58) vorgesehen ist, deren Mittel ($Tr_1$, C, $Tr_2$, R1, R2) abhängig von dem Ds-Bereichssignal ansprechen und eine geänderte Referenzspannung erzeugen; und daß eine Impulsgeneratorschaltung (51, 52) vorgesehen ist, um eine Impulsfolge abhängig von der Referenzspannung zu erzeugen, deren Tastverhältnis zur Veränderung des Kupplungsmoments verändert wird.

2. Steuersystem für eine elektromagnetische Kupplung nach Anspruch 1, dadurch gekennzeichnet, daß die Impulsfolge den Kupplungsstrom so steuert, daß zunächst das Kupplungsmoment reduziert und aschließend der Wert des Kupplungsmoments in einer vorbestimmten Zeit zunehmend wiederhergestellt wird.

3. Steuersystem für eine elektromagentische Kupplung nach Anspruch 1 oder 2, gekennzeichnet durch einen Gaspedalstellungs-Schalter (61) zum Erzeugen eines Gaspedalstellungs-Signals, wenn ein Gaspedal des Fahrzeugs über ein bestimmmtes Maß hinaus niedergedrückt, wird, und eine auf das Gaspedalstellungs-Signal ansprechende Schaltung ($Tr_2$, R1) aufweist, die die vorbestimmte Zeit herabsetzt.

## Revendications

1. Système pour régler ou commander l'embrayage (1) d'un véhicule équipé d'une transmission à rapport variable en continu (2) qui possède un régime de marche avant à vitesse de moteur élévée (Ds) qui, sélectionné, augmente le rapport de transmission, le système incluant un commutateur de régime de marche à vitesse élevée (55) qui, en réponse à la sélection du régime de marche à vitesse de moteur élevée, produit un signal Ds; le système produisant une réduction du couple d'embrayage lorsque le régime de marche à vitesse de moteur élevée (Ds) a été sélectionné, caractérisé en ce que l'embrayage est un embrayage électromagnétique et en ce qu'une unité de commande ou de réglage (50) est prévue qui comporte un circuit (58) engendrant une tension de référence qui a des moyens ($Tr_1$, C, $Tr_2$, R1, R2) qui, en réponse au signal de régime Ds produisent une tension de référence changée, et un circuit (51, 52) pour produire un train d'impulsions fonction de la tension de référence et qui modifie le rapport d'action dudit train d'impulsions de façon à faire varier le couple d'embrayage.

2. Système pour régler ou commander un embrayage électromagnétique (1) selon la revendication 1, caractérisé en ce que ledit train d'impulsions régle le courant d'embrayage d'abord de façon à diminuer le couple d'embrayage et, ensuite, de façon à le rétablir progressivement à sa valeur au bout d'un temps prédéterminé.

3. Système pour régler ou commander un embrayage électromagnétique selon la revendication 1 ou 2, caractérisé par un commutateur de position de pédale d'accélérateur (61) qui produit un signal de position de pédale d'accélérateur quand la pédale d'accélérateur du véhicule a été abaissée au-delà d'une degré ou d'une limite prédéterminée et par un circuit ($Tr_2$, R1) qui, en réponse au signal de position d'accélérateur, abrège ledit temps prédéterminé.

# FIG. 1a

EP 0 151 043 B1

FIG. 1b

FIG. 2

TRIANGLE GENERATOR

CONTROL SIGNAL

# F I G. 3

(a)

$V_{B-D}$

$V_B$

$V_A$

0

(b)

$V_C$

0

(c)

(d)

DRIVE RANGE | DOWNSHIFT RANGE

# F I G. 4

DRIVE RANGE | DOWNSHIFT RANGE

CLUTCH TORQUE

$T_1$

$T_2$

TIME

# FIG. 5

# FIG. 6